# EUROPEAN PATENT SPECIFICATION

(11) **EP 2 261 000 B1**
(45) Date of publication and mention of the grant of the patent: **07.01.2015**
(21) Application number: 08868746.2
(22) Date of filing: 27.11.2008
(51) Int. Cl.: B29C 45/44

(54) **DEVICE FOR DEMOULDING NEGATIVES IN PLASTIC INJECTION MOULDING**
VORRICHTUNG ZUM ENTFORMEN VON NEGATIVEN BEIM KUNSTSTOFFEINSPRITZEN
DISPOSITIF DE DÉMOULAGE DE NÉGATIFS DANS UN PROCÉDÉ DE MOULAGE PAR INJECTION DE MATIÈRE PLASTIQUE

(30) Priority: 31.12.2007 ES 200703497
(43) Date of publication of application: 15.12.2010
(73) Proprietor: Progressive Components International Corporation, Wauconda, IL 60084 (US)
(72) Inventor: Jose Luis Gonzalez Palacio Fenech, 08940 Cornella de Llobregat Barcelona (ES)
(74) Representative: Fleck, Hermann-Josef
(86) International application number: PCT/ES2008/070222
(87) International publication number: WO 2009/083630

(56) References cited:
- EP-A1- 1 674 235
- EP-A1- 1 674 235
- ES-T3- 2 135 182
- ES-U- 1 061 679
- JP-A- 4 319 413
- JP-A- 4 319 413
- US-A- 5 773 048
- US-A1- 2006 172 038

## Description

### PURPOSE OF THE INVENTION

This is a device to demold negatives in plastic injection to prevent the appearance of burrs and to improve the demolding.

### BACKGROUND FOR THE INVENTION

A device to demold negatives in plastic injection is disclosed in ES 1 061 679 U.

EP 1674 235 A1 shows a means for molding parts having an undercut.

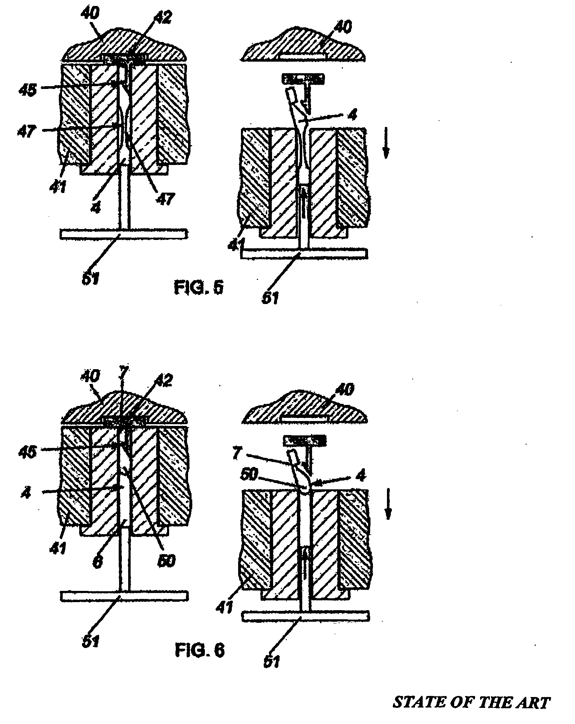

As can be seen in Figures 5 and 6, a mold is known for molding plastic pieces including a fixed part, and another movable part. A die plate is mounted to the fixed part (40) and another die plate is fixed to the moveable part (41); and these two plates form the piece (42) to be molded, when the moveable part of the mold is closed against the fixed part, thereby creating the molding chamber between the two die plates.

The moveable part of the mold is later separated from the fixed part, separating the die plates and leaving the finished piece (42) affixed to one of them, normally to the plate corresponding to the moveable part of the mold. The piece must consequently be removed using some means of ejection.

These pieces are usually ejected using pins or stems which push the molded piece out of the die plate. These pins or stems emanate from an ejection plate (51) which is incorporated so that it floats about the moveable part of the mold. When the ejection plate moves the pins move, thereby causing the piece to be demolded.

In the plastic molding industry the areas of the mold which do not have the same demolding direction as the remainder of the pieces are known as negatives. For example, the gripper (45) for the piece (42) cannot be demolded in the direction used to directly extract the piece (42), as it is buried in the piece.

In these cases, for demolding, movable counter-molds (4) move forward with the ejection plate (51) while also opening on the sides. This opening or lateral movement releases the negative and allows the piece (42) to be extracted as seen in figures 5 and 6.

Figure 5 shows a first variant of the counter-mold. The counter-mold (4) includes a rectangular or circular bar, which is laterally lowered (47) to allow a lateral flexion and release the negative from the mold.

Another variant of the counter-mold is shown in figure 6. The counter-mold (4) includes a cylindrical runner (6) and collapsible head articulated together (7). The articulation (50) allows the collapsible head (7) to move laterally and to release the negative.

The principal problem with the first variant is that in the event any replacing is required due to breakage or wearing, then the entire piece must be replaced, requiring the complete disassembly of the mold support plates as well as considerable time to machine the housing of the piece, which implies significant costs.

The second variant presents no problems; however, the adjustment for the two pieces forming the counter-mold is cylindrical with reduced conicity because: 1- the injection pressure for the plastic can change the position of the collapsible head, thereby causing a change in the geometry of the pieces, burrs, etc.; 2 - as the cylindrical part has a greater surface, it needs to travel further to collapse the first piece.

To prevent these problems, the applicant is the holder of an application for a patent for Spanish invention 200502882 (awaiting publication) which refers to a negative demolding system, covering the layout of a spring between the runner and the head to improve its collapsibility, and the layout of a tilted lateral face in the collapsible head which relocates the head as it moves back into the bushing.

This patent allows the optimum achievement of the objectives sought; however, we wish to continue to move forward with the development of an advantageous demolding system.

### DESCRIPTION OF THE INVENTION

This invention's device for demolding negatives in plastic injection offers various advantages over other similar known systems.

According to the invention, the device is coupled to the means for ejecting a plastic injection mold, and includes a guide bushing that can be attached to the die plate of the moveable part of the mold, inside which is a counter-mold which molds the negative. This counter-mold is comprised of a guide runner and a collapsible head to demold the negative.

Inside the guide bushing is a projection that pushes against the side of the head as the counter-mold moves forward, forcing it to collapse laterally, thereby releasing the negative.
In addition, the invention's device also includes a stop located at the entry of the counter-mold, inside the guide bushing.

In this way the head is forced to collapse, on the one hand, preventing the molded piece from becoming stuck, and preventing it from collapsing.

On the other hand, by stopping the run of the counter-mold, it also prevents it from penetrating too far into the guide bushing as a result of the injection pressure, and therefore prevents the appearance of burrs due to that cause.

### DESCRIPTION OF THE DRAWINGS

A set of drawings has been prepared to complement the description and to help to better understand the characteristics of the invention, according to an example from a preferred exemplary embodiment of the invention. The set of drawings, which are attached as an integral part of the description, include but are not limited to the following:
Figure 1. Shows a general view of the invention device, without the corresponding mold support mounted.
Figure 2. Shows a sequence of the demolding of a negative of a piece, in four steps.
Figure 2a. Shows a sequence where the head moves forward to allow a dismantling from the front.
Figure 3. Shows a detail of the collapsible head support at the stop of the guide bushing.
Figure 4. Shows an exploded view of the invention device.
Figure 5. Shows a first variant of a movable counter-mold which is part of the state of the art, and formed of a rectangular or circular bar which is lowered laterally.
Figure 6. Shows a second variant of a movable counter-mold which is part of the state of the art, formed of a cylindrical runner and a collapsible head articulated together.

### PREFERRED EMBODIMENT OF THE INVENTION

The device invented (1) used to demold negatives in plastic injection is coupled to the means for ejecting a plastic injection mold. This includes a guide bushing (2) which can be attached to the die plate of the movable part (41) of the mold, inside which extends a counter-mold (4) which molds the negative (5).

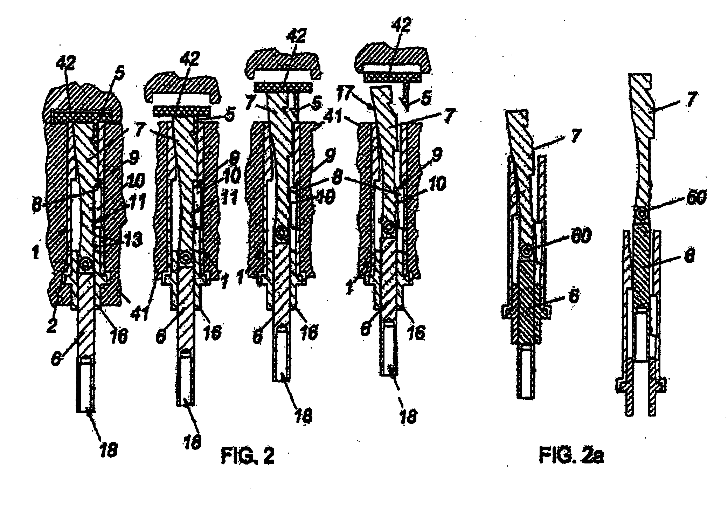

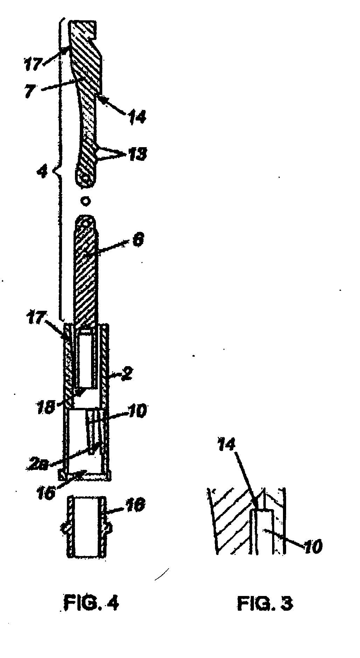

The counter-mold (4), as seen in figure 4, is comprised of a guide runner (6) and a collapsible head (7) which is articulated to the runner (6), and used to demold the negative (5). The articulation between the head (7) and the runner (6) allows the head to be disassembled from the front as the counter-mold moves forward so that the pin (60), which constitutes the articulation, can become accessible, as seen in Figure 2a. This prevents having to dismount the complete mold support plates when the head must be replaced as a result of wear or for other reasons.

Inside the guide bushing (2) is a projection (8) which pushes against the side of the head (7) as the counter-mold (4) moves forward, thereby forcing the head to collapse laterally and releasing the negative (5), according to the sequence shown in figure 2.

Likewise a stop (9) has been placed inside the guide bushing (2) to stop the counter-mold (4) from entering the guide bushing (2), in order to stop its run and to eliminate any burrs on the molded piece.

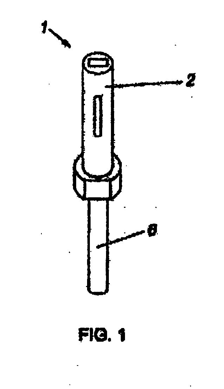

In the example of the embodiment shown in figures 1-4, the projection (8) and the stop (9) are implemented by a single piece (10), which can be removed for machining, and fit into some internal housings (2a) of the guide bushing (2) (see figure 4).

The guide bushing (2) implements a chamber (15) which is sufficiently broad to be able to place the piece (10) inside, in the housings (2a). This chamber is closed by an axial guide (16), through which the runner runs (6).

The piece (10) has a tilted longitudinal runner (11) which pushes against the side of the head (7), as well as a transversal upper step (12) which constitutes the stop (9). The head (7) implements some lateral protuberances (13) that are in contact with the step (11), as well as a chock (14) that is in contact with the stop (9).

The head (7) and the end of the guide bushing (2) where the head is located (7) have an increased section towards the free end. In this way they help to immobilize the counter-mold (4), as the lateral support of the head (7) in that section of the guide bushing (2) prevents the head from continuing to penetrate due to the plastic injection pressure. This geometry also allows the head to collapse laterally (7) with a lower ejection run, in comparison with the totally cylindrical counter-molds such as those shown in figures 5 and 6, which are part of the state of the art. The increase in the head section (7) and the end of the guide bushing (2) are the result of a flat inclined face (17) with which both come into contact.

Finally the invention has a hole or holes (18) at the lower ends of each runner (6) to affix the runner (6) to the means used to eject the mold.

## Claims

1. Device (1) to demold negatives in plastic injection, which is coupled to the means for ejecting a plastic injection mold, and includes a guide bushing (2) which can be attached to the die plate on the movable part (41) of the mold, inside which extends a counter-mold (4) is located which molds the negative (5), formed of a guide runner (6) and a collapsible head (7) to demold the negative (5);
**characterized in that**
inside the guide bushing (2) there is a projection (8) which pushes against the side of the head (7) as the counter-mold moves forward (4), in order to force the lateral collapse of the head and to release the negative (5), wherein inside the guide bushing (2) a stop (9) has been placed to prevent entry by the counter-mold (4), for the purpose of limiting its run and eliminating burrs in the molded piece and the projection (8) and the stop (9) are implemented by a single removable piece (10), which fits into housings (2a) inside the guide bushing (2).

2. Device (1) to demold negatives according to claim 1,
**characterized in that**
the guide bushing (2) implements a chamber (15) with the housings (2a).

3. Device (1) to demold negatives according to claim 2,
**characterized in that**
the guide bushing (2) implements an axial guide (16) which closes the chamber (15) and through which the runner runs (6).

4. Device (1) to demold negatives according to any of the preceding claims,
**characterized in that**
the piece (10) presents an inclined longitudinal (11) which pushes against the side of the head (7), and an upper transversal step (12) which constitutes the stop (9).

5. Device (1) to demold negatives according to claim 4,
**characterized in that**
the head implements lateral projections (13) which come into contact with the runner (11), as well as a chock (14) which comes into contact with the stop (9).

6. Device (1) to demold negatives according to any of the above claims,
**characterized in that**
the head (7) and the end of the guide bushing (2) where it is housed increase in section towards the free end, in order to help immobilize the counter-mold (4) and allow the lateral collapse of the head (7).

7. Device (1) to demold negatives according to claim 6,
**characterized in that**
the section is increased by a flat inclined face (17).

8. Device (1) to demold negatives according to any of the above claims,
**characterized in that**
the runner (6) has holes (18) to fix the mold ejection means.

9. Device (1) to demold negatives according to any of the above claims,
**characterized in that**
the head (7) is articulated to the runner (6) by a pin (60) accessible when the mold moves forward, in order to allow the head (7) to be disassembled from the front.

## Patentansprüche

1. Vorrichtung (1) zum Entformen von Negativen beim Kunststoffeinspritzen, die an das Mittel zum Auswerfen einer Kunststoffeinspritzform gekuppelt ist und eine Führungsbuchse (2) enthält, welche an der Formplatte auf dem beweglichen Teil (41) der Form angebracht sein kann, in der sich eine Gegenform (4) befindet, die das Negativ (5) formt, ausgebildet aus einer Führungsschiene (6) und einem klappbaren Kopf (7) zum Entformen des Negativs (5);
**dadurch gekennzeichnet, dass**
innerhalb der Führungsbuchse (2) ein Vorsprung (8) vorliegt, der gegen die Seite des Kopfs (7) drückt, wenn sich die Gegenform nach vorne bewegt (4), um das seitliche Zusammenklappen des Kopfs zu erzwingen und das Negativ (5) freizugeben, wobei innerhalb der Führungsbuchse (2) ein Anschlag (9) zum Verhindern des Eintritts durch die Gegenform (4) angeordnet wurde, zum Zweck des Begrenzens ihres Laufs und Beseitigens von Graten im Formstück, und wobei der Vorsprung (8) und der Anschlag (9) durch ein einzelnes herausnehmbares Stück (10) implementiert sind, das in die Gehäuse (2a) innerhalb der Führungsbuchse (2) passt.

2. Vorrichtung (1) zum Entformen von Negativen nach Anspruch 1,
**dadurch gekennzeichnet, dass**
die Führungsbuchse (2) eine Kammer (15) mit den Gehäusen (2a) implementiert.

3. Vorrichtung (1) zum Entformen von Negativen nach Anspruch 2,
**dadurch gekennzeichnet, dass**
die Führungsbuchse (2) eine axiale Führung (16) implementiert, die die Kammer (15) schließt und durch die die Schiene (6) läuft.

4. Vorrichtung (1) zum Entformen von Negativen nach einem der vorhergehenden Ansprüche,
**dadurch gekennzeichnet, dass**
das Stück (10) eine geneigte Längsstufe (11), die gegen die Seite des Kopfs (7) drückt, und eine obere Querstufe (12) aufweist, die den Anschlag (9) bildet.

5. Vorrichtung (1) zum Entformen von Negativen nach Anspruch 4,
**dadurch gekennzeichnet, dass**
der Kopf seitliche Vorsprünge (13) implementiert, die mit der Schiene (11) in Kontakt kommen, sowie einen Block (14), der mit dem Anschlag (9) in Kontakt kommt.

6. Vorrichtung (1) zum Entformen von Negativen nach einem der vorhergehenden Ansprüche,
**dadurch gekennzeichnet, dass**
der Kopf (7) und das Ende der Führungsbuchse (2), in der er eingefasst ist, im Schnitt zum freien Ende hin zunehmen, um dabei zu helfen, die Gegenform (4) festzusetzen und das seitliche Zusammenklappen des Kopfs (7) zu ermöglichen.

7. Vorrichtung (1) zum Entformen von Negativen nach Anspruch 6,
**dadurch gekennzeichnet, dass**
der Schnitt durch eine flache geneigte Seitenfläche (17) erhöht ist.

8. Vorrichtung (1) zum Entformen von Negativen nach einem der vorhergehenden Ansprüche,
**dadurch gekennzeichnet, dass**
die Schiene (6) Löcher (18) zum Befestigen des Formauswurfmittels aufweist.

9. Vorrichtung (1) zum Entformen von Negativen nach einem der vorhergehenden Ansprüche,
**dadurch gekennzeichnet, dass**
der Kopf (7) an der Schiene (6) durch einen Stift (60) angelenkt ist, der zugänglich ist, wenn sich die Form nach vorne bewegt, um zu ermöglichen, den Kopf (7) von der Vorderseite abzunehmen.

## Revendications

1. Dispositif (1) de démoulage de négatifs dans un procédé d'injection de matière plastique, qui est couplé à des moyens d'éjection d'un moule d'injection de plastique, et comprenant une douille de guidage (2) qui peut être attachée à la plaque de matrice sur la partie mobile (41) du moule, à l'intérieur se trouve un contre-moule (4) qui moule le négatif (5), constitué d'un coulisseau de guidage (6) et d'une tête écrasable (7) pour démouler le négatif (5); **caractérisé en ce que**, à l'intérieur de la douille de guidage (2), il est prévu une saillie (8) qui exerce une poussée contre le côté de la tête (7) lorsque le contre-moule (4) se déplace vers l'avant dans le but de forcer l'écrasement latéral de la tête et de libérer le négatif (5), dans lequel, à l'intérieur de la douille de guidage (2), un arrêt (9) a été placé pour empêcher l'entrée par le contre-moule (4), dans le but de limiter sa course et d'éliminer les bavures dans la pièce moulée, et la saillie (8) et l'arrêt (9) sont formés par une seule pièce amovible (10) qui s'agence dans des boîtiers (2a) à l'intérieur de la douille de guidage (2).

2. Dispositif (1) de démoulage de négatifs selon la revendication 1, **caractérisé en ce que** la douille de guidage (2) forme une chambre (15) avec les boîtiers (2a).

3. Dispositif (1) de démoulage de négatifs selon la revendication 2, **caractérisé en ce que** la douille de guidage (2) comprend un guide axial (16) qui délimite la chambre (15) et à travers lequel le coulisseau (6) se déplace.

4. Dispositif (1) de démoulage de négatifs selon l'une quelconque des revendications précédentes, **caractérisé en ce que** la pièce (10) présente un plan longitudinal incliné (11) qui exerce une poussée contre le côté de la tête (7), et un gradin transversal supérieur (12) qui constitue l'arrêt (9).

5. Dispositif (1) de démoulage de négatifs selon la revendication 4, **caractérisé en ce que** la tête comporte des saillies latérales (13) qui entrent en contact avec le coulisseau (11), ainsi qu'une cale (14) qui entre en contact avec l'arrêt (9).

6. Dispositif (1) de démoulage de négatifs selon l'une quelconque des revendications précédentes, **caractérisé en ce que** la section de la tête (7) et de l'extrémité de la douille de guidage (2) où elle est logée augmente en direction de l'extrémité libre dans le but d'aider à immobiliser le contre-moule (4) et de permettre l'écrasement latéral de la tête (7).

7. Dispositif (1) de démoulage de négatifs selon la revendication 6, **caractérisé en ce que** la section est augmentée par une face inclinée plate (17).

8. Dispositif (1) de démoulage de négatifs selon l'une quelconque des revendications précédentes, **caractérisé en ce que** le coulisseau (6) comporte des trous (18) pour fixer les moyens d'éjection de moule.

9. Dispositif (1) de démoulage de négatifs selon l'une quelconque des revendications précédentes, **caractérisé en ce que** la tête (7) est articulée sur le coulisseau (6) par une broche (60) accessible lorsque le moule se déplace vers l'avant, dans le but de permettre à la tête (7) d'être désassemblée de la partie avant.
